# EUROPÄISCHE PATENTANMELDUNG

(11) **EP 1 433 629 A1**
(43) Veröffentlichungstag der Anmeldung: **30.06.2004**
(21) Anmeldenummer: 03016781.1
(22) Anmeldetag: 23.07.2003
(51) Int. Cl.: B60H 1/00

(54) **Klimatisierungsvorrichtung und Verfahren zur Klimatisierung eines begrenzten Volumens**

(30) Priorität: 23.12.2002 DE 10261792
(71) Anmelder: ROBERT BOSCH GMBH, 70442 Stuttgart (DE)
(72) Erfinder: Harnisch-Scheuermann, Juergen, 71272 Renningen (DE); Singer, Horst, 71732 Tamm (DE)

(57) **Zusammenfassung**

Die Erfindung betrifft eine Klimatisierungsvorrichtung zur Klimatisierung eines begrenzten Volumens bzw. Innenraums, mit einer Einrichtung zur Zuführung erwärmter oder gekühlter Luft in das Volumen, und mit einer Regeleinrichtung zur Regelung einer Lufttemperatur im Volumen entsprechend einer vorgewählten Solltemperatur durch Vergleich einer aktuellen Lufttemperatur im Volumen mit der Solltemperatur.

Es ist vorgesehen, dass ein Temperatursensor (28) zur Erfassung der aktuellen Lufttemperatur in einem Luftauslasskanal (26) bzw. in dessen Nähe angeordnet ist.

Die Erfindung betrifft weiterhin ein entsprechendes Verfahren zur Klimatisierung eines begrenzten Volumens.

## Beschreibung

Die Erfindung betrifft eine Klimatisierungsvorrichtung zur Klimatisierung eines begrenzten Volumens gemäß Oberbegriff der Patentansprüche 1 bzw. 3 sowie ein Verfahren zur Klimatisierung eines begrenzten Volumens gemäß Oberbegriff der Ansprüche 8 bzw. 11.

### Stand der Technik

Es sind Fahrzeugklimatisierungssysteme bekannt, bei denen eine Fahrzeuginnentemperatur geregelt wird. Dabei werden zur Messung der Fahrzeuginnentemperatur meist ein oder mehrere Fahrzeuginnentemperaturfühler verwendet. Diese befinden sich meist im Dach oder im bzw. in der Nähe eines Klimabedienteils. Diese Temperaturfühler benötigen zur möglichst genauen Erfassung der Fahrzeuginnentemperatur einen Luftstrom, der üblicherweise durch ein Innenfühlergebläse oder eine Luftstrahlpumpe erzeugt wird und der vom Fahrzeuginnenraum über den bzw. die Fahrzeuginnentemperaturfühler gelenkt wird.

Diese Innenfühlergebläse oder Luftstrahlpumpen verursachen ein möglicherweise störendes Geräusch und sind zudem relativ aufwändig.

Aus der DE 37 22 000 ist ein Verfahren zur Messung einer Innentemperatur bekannt, bei dem eine Erfassung einer auf die Fühlerumgebung auftreffenden Wärmestrahlung erfolgt.

### Vorteile der Erfindung

Eine Klimatisierungsvorrichtung zur Klimatisierung eines begrenzten Volumens bzw. Innenraums weist eine Einrichtung zur Zuführung erwärmter oder gekühlter Luft in das Volumen und eine Regeleinrichtung zur Regelung einer Lufttemperatur im Volumen entsprechend einer vorgebildeten Solltemperatur durch Vergleich einer aktuellen Lufttemperatur im Volumen mit der Solltemperatur auf. Erfindungsgemäß ist vorgesehen, dass ein Temperatursensor zur Erfassung der aktuellen Lufttemperatur in einem Luftauslasskanal bzw. in dessen Nähe angeordnet ist. Hierbei erfolgt eine zuverlässige Erfassung der Temperatur im Volumen durch Messung der aus dem Volumen austretenden Lufttemperatur. Da an den Abluftkanälen in der Regel immer ein ausreichender Luftstrom für eine gute Sensierung der Ablufttemperatur vorhanden ist, ist hier die gewünschte Unabhängigkeit von störenden Umgebungseinflüssen gegeben.

Eine bevorzugte Ausgestaltung der Erfindung sieht vor, dass mehrere Luftauslasskanäle mit jeweils wenigstens einem darin bzw. daran angeordnetem Temperatursensor vorgesehen sind. Hierdurch können mehrere Innenraumzonen individuell klimatisiert werden, indem die Erwärmung bzw. Abkühlung eines auf mehrere Einströmkanäle aufgeteilten Luftstromes individuell geregelt bzw. gesteuert wird.

Eine weitere Klimatisierungseinrichtung zur Klimatisierung eines begrenzten Volumens bzw. Innenraums weist eine Einrichtung zur Umwälzung und Temperierung der im Volumen befindlichen Luft und eine Regeleinrichtung zur Regelung einer Lufttemperatur im Volumen entsprechend einer vorgewählten Solltemperatur durch Vergleich einer aktuellen Lufttemperatur im Volumen mit der Solltemperatur auf. Erfindungsgemäß ist vorgesehen, dass ein Temperatursensor zur Erfassung der aktuellen Lufttemperatur in einem Ansaugkanal der Einrichtung zur Umwälzung und Temperierung der Luft bzw. in dessen Nähe angeordnet ist. Hierdurch kann bei einer im Umluftbetrieb arbeitenden Klimatisierungsvorrichtung eine Lufttemperatur der im Volumen befindlichen Luft gemessen werden, ohne dass irgendwelche störenden Umgebungseinflüsse das Messergebnis verfälschen können. Alternativ können mehrere Ansaugkanäle mit jeweils wenigstens einem darin bzw. daran angeordnetem Temperatursensor vorgesehen sein. Mit einer solchen Anordnung sind mehrere Innenraumzonen individuell klimatisierbar.

Eine bevorzugte Ausgestaltung der Erfindung sieht vor, dass das begrenzte Volumen ein Fahrzeuginnenraum, insbesondere ein Innenraum eines Kraftfahrzeugs ist.

Ein erfindungsgemäßes Verfahren zur Klimatisierung eines begrenzten Volumens bzw. Innenraums, dem erwärmte oder gekühlte Luft zugeführt wird, sieht vor, dass eine Lufttemperatur im Volumen durch einen Vergleich einer aktuellen Lufttemperatur mit einer vorgegebenen Solltemperatur geregelt wird. Erfindungsgemäß ist vorgesehen, dass die aktuelle Lufttemperatur in einem Luftauslasskanal oder in dessen Nähe erfasst wird. Vorzugsweise entspricht eine durch den Luftauslasskanal austretende Luftmenge annähernd einer dem Volumen zugeführten Luftmenge. Die Temperaturen mehrerer Innenraumzonen können wahlweise durch Erfassung von aktuellen Lufttemperaturen in bzw. an mehreren Luftauslasskanälen individuell geregelt bzw. gesteuert werden.

Ein weiteres Verfahren zur Klimatisierung eines begrenzten Volumens bzw. Innenraums, dessen Luft umgewälzt und dabei erwärmt oder gekühlt wird, sieht vor, dass eine Lufttemperatur im Volumen durch einen Vergleich einer aktuellen Lufttemperatur mit einer vorgewählten Solltemperatur geregelt wird. Hierbei wird die aktuelle Lufttemperatur in einem Ansaugkanal einer Einrichtung zur Umwälzung und Temperierung der Luft bzw. in dessen Nähe erfasst. Wahlweise können die Temperaturen mehrerer Innenraumzonen durch Erfassung von aktuellen Lufttemperaturen in bzw. an mehreren Ansaugkanälen individuell geregelt bzw. gesteuert werden.

Das erfindungsgemäße Verfahren eignet sich insbesondere zur effektiven Klimatisierung von Fahrzeuginnenräumen. Hierbei erfolgt die Temperierung der Luft des Fahrzeuginnenraums üblicherweise durch eine oder mehrere Klimaanlagen. Dabei wird die der Klimaanlage zugeführte Luft durch diese je nach Bedarf gekühlt bzw. erwärmt. Der Grad der Abkühlung bzw. Erwärmung ist unter anderem abhängig von der im Innenraum herrschenden Lufttemperatur. Die präzise Erfassung der Fahrzeug-Innenraumtemperatur ist demnach bei einem solchen Klimatisierungssystem mit einer Innentemperaturregelung von besonderer Bedeutung. Die Zuführung temperierter Luft bedingt eine Ausströmung einer äquivalenten Luftmenge aus dem Fahrzeuginnenraum. Daher werden entsprechende Abluftkanäle, durch die Luft wieder aus dem Fahrzeuginnenraum ausströmt, im Fahrzeuginnenraum vorgesehen. Als Ausströmkanäle sind insbesondere Abluftkanäle vorgesehen, die entsprechende Luftauslassöffnungen, bspw. in einer Hutablage, aufweisen und die Luft aus dem Fahrzeuginnenraum ausströmen lassen. Es sind jedoch auch Klimatisierungseinrichtungen mit mehreren, an unterschiedlichen Stellen im Fahrzeug platzierten Abluftkanälen bekannt.

Die physikalischen Eigenschaften der aus dem Fahrzeuginnenraum ausströmenden Luft sind repräsentativ für die im Fahrzeuginnenraum herrschenden Bedingungen und können daher zur Erfassung der Fahrzeuginnenraumtemperatur und anderer Luftgüteparameter wie bspw. der Luftfeuchte oder einer Schadstoffbelastung dienen. Je nach Zahl und Positionierung von vorhandenen Abluftöffnungen können die unterschiedlichen Ablufttemperaturen als Indikatoren für die in entsprechenden Innenraumzonen vorherrschenden Bedingungen und Temperaturen dienen. Sind bspw. Luftauslassöffnungen für die Abluftkanäle sowohl in einem oberen wie auch in einem unteren Fahrzeugbereich vorgesehen, können die evtl. unterschiedlichen Ablufttemperaturen zur individuellen Regelung einer Kopfraumtemperatur und einer Fußraumtemperatur herangezogen werden.

Da es bei bestimmten Betriebsbedingungen von Nachteil ist, dem Fahrzeuginnenraum klimatisierte Frischluft zuzuführen, weisen derartige Klimatisierungsvorrichtungen typischerweise einen sog. Umluftbetrieb auf, während dessen die Innenraumluft lediglich umgewälzt und dabei klimatisiert wird. Der Umluftbetrieb kommt insbesondere bei einer hohen Schadstoffbelastung oder sehr hoher Temperatur der Außenluft in Frage. Beim Umluftbetrieb sind allerdings zu Frischluft- und Abluftöffnungen verschlossen, so dass zur Temperaturregelung ein weiterer Temperatursensor in einem Umluftkanal vorzusehen ist, vorzugsweise in einer Ansaugöffnung der Klimatisierungsvorrichtung. Prinzipiell kann sich dieser Sensor jedoch an beliebiger Stelle des Luftweges von der Umluftöffnung bis zum ersten Wärmetauscher der Klimaanlage befinden.

Weitere vorteilhafte Ausgestaltungen der Erfindung ergeben sich aus den übrigen, in den abhängigen Ansprüchen genannten Merkmalen.

### Zeichnungen

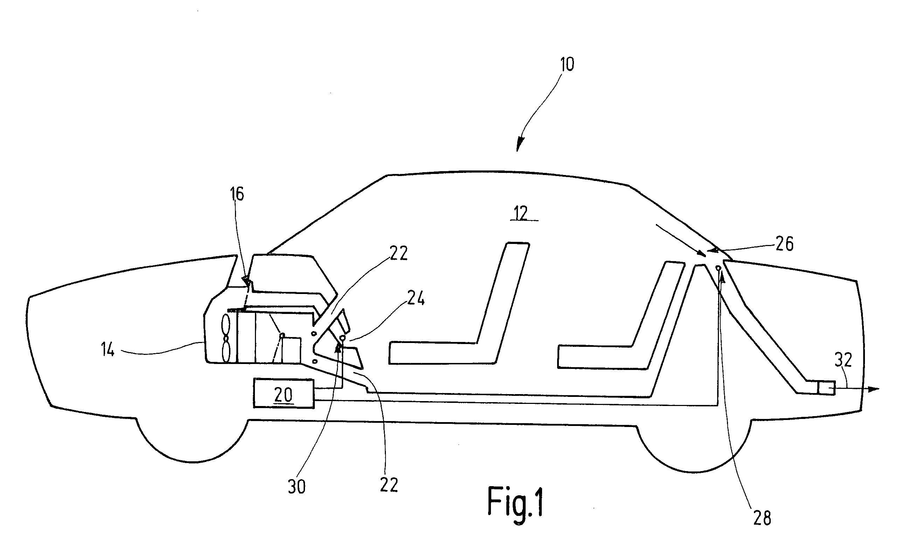

Die Erfindung wird nachfolgend in bevorzugten Ausführungsbeispielen anhand der zugehörigen Zeichnungen näher erläutert. Dabei zeigt die einzige Figur 1 eine schematische Darstellung einer erfindungsgemäßen Klimatisierungsvorrichtung eines Kraftfahrzeugs.

### Beschreibung der Ausführungsbeispiele

Die Figur 1 verdeutlicht ein Kraftfahrzeug 10, dessen Innenraum 12 mit Hilfe einer Klimaanlage 14 klimatisiert werden kann. Die Klimaanlage 14 weist ein Gebläse sowie wenigstens einen Wärmetauscher zur Zuführung von erwärmter oder gekühlter Luft in den Fahrzeuginnenraum 12 auf. In einem ersten Betriebsmodus saugt die Klimaanlage Frischluft durch einen Frischlufteintritt 16 an einer Fahrzeugfront an und gibt die temperierte Luft durch Luftzufuhrkanäle 22 in den Innenraum 12 ab.

Die Temperaturregelung im ersten Betriebsmodus erfolgt auf Basis der im Innenraum 12 gemessenen Temperatur und deren Abweichung von einer vorgewählten Solltemperatur, die vom Fahrer oder einem Passagier mittels Bedienelementen (nicht dargestellt) an einem Klimasteuergerät 20 eingestellt wird. Um eine möglichst präzise Erfassung der Innenraumtemperaturen zu ermöglichen und um Messwertverfälschungen durch Sonneneinstrahlung o. dgl. auszuschließen, ist ein Temperatursensor 28 in einem Luftauslasskanal 26 oder in dessen unmittelbarer Nähe im hinteren Bereich des Fahrzeuginnenraums 12 angeordnet, durch den die verbrauchte Luft nach außen in Richtung eines Austritts 32 geführt wird. Sind mehrere Luftauslasskanäle 26 in unterschiedlichen Positionen und Fahrzeughöhen angeordnet, können durch jeweils darin angeordnete Temperatursensoren 28 die Temperaturen verschiedener Innenraumzonen individuell erfasst und geregelt bzw. gesteuert werden. Hierzu sind vorzugsweise sind mehrere Luftzufuhrkanäle 22 in unterschiedlichen Positionen angeordnet, um die verschiedenen Innenraumzonen individuell mit unterschiedlich stark erwärmter oder gekühlter Luft beaufschlagen zu können.

Ein zweiter Betriebsmodus sieht einen Umluftbetrieb vor, bei dem die Frischluftzufuhr 16 geschlossen ist, um bspw. keine erhöhte Schadstoffbelastung in den Fahrzeuginnenraum 12 zu fördern. Da hierbei vorzugsweise auch die Luftauslasskanäle 26 verschlossen sind, eignen sich die darin angeordneten Temperatursensoren 28 nicht mehr zur Temperatursensierung. Bei diesem Umluftbetrieb ist vorzugsweise wenigstens ein weiterer Temperatursensor 30 in einem Ansaugkanal 24 der Klimaanlage 14 vorgesehen, der nur in einem Umluftbetrieb geöffnet ist. Die Luft im Fahrzeuginnenraum 12 wird hierbei lediglich umgewälzt und dabei klimatisiert, indem die Luft durch den Luftansaugkanal 24 angesaugt und durch die Luftzuführkanäle 22 wieder in den Innenraum 12 abgegeben wird.

Wahlweise können zusätzlich zu den Temperatursensoren 28 und 30 weitere Sensoren zur Erfassung einer Luftgüte vorgesehen sein, die vorzugsweise an jeweils der gleichen Einbauposition in den Kanälen 24 und 26 angeordnet sind. Als solche weiteren Parameter zur Messung der Luftgüte können bspw. eine Luftfeuchtigkeit, ein CO₂-Anteil oder ein Ozongehalt der Luft dienen.

## Patentansprüche

1. Klimatisierungsvorrichtung zur Klimatisierung eines begrenzten Volumens bzw. Innenraums, mit einer Einrichtung zur Zuführung erwärmter oder gekühlter Luft in das Volumen, und mit einer Regeleinrichtung zur Regelung einer Lufttemperatur im Volumen entsprechend einer vorgewählten Solltemperatur durch Vergleich einer aktuellen Lufttemperatur im Volumen mit der Solltemperatur, **dadurch gekennzeichnet, dass** ein Temperatursensor (28) zur Erfassung der aktuellen Lufttemperatur in einem Luftauslasskanal (26) bzw. in dessen Nähe angeordnet ist.

2. Klimatisierungsvorrichtung nach Anspruch 1, **dadurch gekennzeichnet, dass** mehrere Luftauslasskanäle (26) mit jeweils wenigstens einem darin bzw. daran angeordneten Temperatursensor (28) vorgesehen sind.

3. Klimatisierungsvorrichtung zur Klimatisierung eines begrenzten Volumens bzw. Innenraums, mit einer Einrichtung zur Umwälzung und Temperierung der im Volumen befindlichen Luft, und mit einer Regeleinrichtung zur Regelung einer Lufttemperatur im Volumen entsprechend einer vorgewählten Solltemperatur durch Vergleich einer aktuellen Lufttemperatur im Volumen mit der Solltemperatur, **dadurch gekennzeichnet, dass** ein Temperatursensor (30) zur Erfassung der aktuellen Lufttemperatur in einem Ansaugkanal (24) der Einrichtung zur Umwälzung und Temperierung der Luft bzw. in dessen Nähe angeordnet ist.

4. Klimatisierungsvorrichtung nach Anspruch 3, **dadurch gekennzeichnet, dass** mehrere Ansaugkanäle (24) mit jeweils wenigstens einem darin bzw. daran angeordneten Temperatursensor (30) vorgesehen sind.

5. Klimatisierungsvorrichtung nach einem der Ansprüche 1 bis 4, **dadurch gekennzeichnet, dass** mehrere Innenraumzonen individuell klimatisierbar sind.

6. Klimatisierungsvorrichtung nach einem der voranstehenden Ansprüche, **dadurch gekennzeichnet, dass** wenigstens ein Sensor zur Erfassung einer Luftgüte und/oder einer Luftfeuchtigkeit vorgesehen ist.

7. Klimatisierungsvorrichtung nach einem der voranstehenden Ansprüche, **dadurch gekennzeichnet, dass** das begrenzte Volumen ein Fahrzeuginnenraum, insbesondere ein Innenraum (12) eines Kraftfahrzeugs (10) ist.

8. Verfahren zur Klimatisierung eines begrenzten Volumens bzw. Innenraums, dem erwärmte oder gekühlte Luft zugeführt wird, wobei eine Lufttemperatur im Volumen durch einen Vergleich einer aktuellen Lufttemperatur mit einer vorgewählten Solltemperatur geregelt wird, **dadurch gekennzeichnet, dass** die aktuelle Lufttemperatur in einem Luftauslasskanal (26) oder in dessen Nähe erfasst wird.

9. Verfahren nach Anspruch 8, **dadurch gekennzeichnet, dass** eine durch den Luftauslasskanal (26) austretende Luftmenge annähernd einer dem Volumen zugeführten Luftmenge entspricht.

10. Verfahren nach Anspruch 8 oder 9, **dadurch gekennzeichnet, dass** die Temperaturen mehrerer Innenraumzonen durch Erfassung von aktuellen Lufttemperaturen in bzw. an mehreren Luftauslasskanälen (26) individuell regelbar sind.

11. Verfahren zur Klimatisierung eines begrenzten Volumens bzw. Innenraums, dessen Luft umgewälzt und dabei erwärmt oder gekühlt wird, wobei eine Lufttemperatur im Volumen durch einen Vergleich einer aktuellen Lufttemperatur mit einer vorgewählten Solltemperatur geregelt wird, **dadurch gekennzeichnet, dass** die aktuelle Lufttemperatur in einem Ansaugkanal (24) einer Einrichtung zur Umwälzung und Temperierung der Luft bzw. in dessen Nähe erfasst wird.

12. Verfahren nach Anspruch 11, **dadurch gekennzeichnet, dass** die Temperaturen mehrerer Innenraumzonen durch Erfassung von aktuellen Lufttemperaturen in bzw. an mehreren Ansaugkanälen (24) individuell regelbar sind.

13. Verfahren nach einem der Ansprüche 8 bis 12, **dadurch gekennzeichnet, dass** eine Luftgüte und/oder eine Luftfeuchtigkeit innerhalb des begrenzten Volumens bzw. Innenraums erfasst wird.

14. Verfahren nach Anspruch 13, **dadurch gekennzeichnet, dass** in Abhängigkeit der erfassten Luftgüte und/oder Luftfeuchtigkeit in den Umluftbetrieb umgeschaltet wird.

15. Verfahren nach einem der Ansprüche 8 bis 14, **dadurch gekennzeichnet, dass** die Luft eines Fahrzeuginnenraums, insbesondere eines Innenraums (12) eines Kraftfahrzeugs (10) temperiert bzw. klimatisiert wird.
